# EUROPEAN PATENT SPECIFICATION

(11) **EP 4 164 396 B1**
(45) Date of publication and mention of the grant of the patent: **08.05.2024**
(21) Application number: 21723924.3
(22) Date of filing: 09.04.2021
(51) Int. Cl.: A23B 4/027, A23B 4/023, A23B 4/033, A23B 4/03

(54) **METHOD OF PRODUCING BONELESS AND RINDLESS, RAW CURED MEATS AND CORRESPONDING PRODUCTION PLANT**
VERFAHREN ZUR HERSTELLUNG VON KNOCHENLOSEN ROHPÖKELFLEISCH OHNE SCHWARTE UND ENTSPRECHENDE PRODUKTIONSANLAGE
PROCÉDÉ DE PRODUCTION DE VIANDE SALÉE CRUE, SANS OS ET SANS COUENNE ET INSTALLATION DE PRODUCTION CORRESPONDANTE

(30) Priority: 10.06.2020 IT 202000013948
(43) Date of publication of application: 19.04.2023
(73) Proprietor: Gio' Porro S.r.l., 22063 Cantu' (IT)
(72) Inventor: PORRO, Giovanni, 22063 Cantu' (IT)
(74) Representative: Garavelli, Paolo
(86) International application number: PCT/IT2021/050101
(87) International publication number: WO 2021/250709

(56) References cited:
- GÖK VELI ET AL: "Effects of packaging method and storage time on the chemical, microbiological, and sensory properties of Turkish pastirma - A dry cured beef product", MEAT SCIENCE, vol. 80, no. 2, 2008, pages 335-344, XP029170206, ISSN: 0309-1740, DOI: 10.1016/J.MEATSCI.2007.12.017
- MANIACI GIUSEPPE ET AL: "Bresaola made from Cinisara cattle: effect of muscle type and animal category on physicochemical and sensory traits", CYTA - JOURNAL OF FOOD, vol. 18, no. 1, 27 May 2020 (2020-05-27), pages 383-391, XP055827522, UK ISSN: 1947-6337, DOI: 10.1080/19476337.2020.1762746 Retrieved from the Internet: URL:http://dx.doi.org/10.1080/19476337.202 0.1762746>

## Description

The present invention refers to a method of producing raw sausages without bone and without rind with a short maturation (up to 16 months) which does not involve the use of nitrites, nitrates, other preservatives and antioxidants.

In particular, the invention refers to a method of producing raw cured meats without bone and without rind with a short maturation (for a period of less than or equal to 16 months) and the related production plant. XP055827522 discloses a method of manufacturing Bresaola.

The current production of raw cured meats of the Italian tradition without bone and without rind with a short maturation (up to 16 months) involves the use of two main preservatives, Nitrites (E249-E250) and Nitrates (E251-E252), often along with other preservatives and antioxidants. The use of the chemical additives mentioned above keeps the meat red color similar to that of fresh meat and controls, thanks to the bacteriostatic action of the additives, the bacterial load of the final product, as the meat is easily attacked by bacteria, particularly during the phase of salting.

However, these additives (in particular Sodium Nitrite) present the problem of being considered by the medical world to be the basis of intestinal formation processes of nitrosamines which in turn can cause tumor formations (the first reason for colorectal tumors).

In recent years, the European law on the obligation to declare preservatives on the label has been circumvented by some producers using the vegetable variant of these preservatives (Nitrites and Nitrates obtained from vegetables such as spinach, with titration of the same defined in the laboratory), a misleading practice towards the consumer on whom the European Community has expressed itself negatively, so much so that soon the EU countries will have to oblige producers to indicate these preservatives on the label even if they are of vegetable origin.

Object of the present invention is providing a method of producing raw cured meats without bone and without rind with a short maturation (up to 16 months) which guarantees a truly natural final product, not requiring the use of preservatives and antioxidants, nor of chemical or vegetable origin, safe from a hygienic point of view, of high quality for aroma, taste and softness and with a natural ruby red color without stains or brownish coloring. The aforesaid and other objects and advantages of the invention, as will emerge from the following description, are achieved with a method of producing raw sausage without bone and without rind with short maturation (up to 16 months) without nitrites, nitrates, other preservatives and antioxidants. Preferred embodiments and non-trivial variants of the present invention form the subject of the dependent claims.

It will be immediately obvious that innumerable variations and modifications (for example relating to shape, dimensions, arrangements and parts with equivalent functionality) can be made to what is described without departing from the scope of the invention as appears from the attached claims.

The present invention will be better described by a preferred embodiment, given by way of nonlimiting example.

The method of producing raw, boneless and rindless cured meats with short maturation (up to 16 months) of the present invention includes the following steps:
- a phase of receipt on the production line of the raw material in the fresh state at a temperature at the core of the product between 0 °C and +8 °C that has not previously undergone a freezing process, delivered fresh, i.e. not frozen, hung or protected by vacuum packaging, in optimal conditions for the pH of the meat (between 5.2 and 5.9) and with a residual oxygen value in the vacuum bag of <= 0.5% and a bacterial load controlled with cfu/g limits according to the provisions of the law; in addition, the raw material received on the production line must have followed a correct maturation process, in a maturation cell at a temperature between 0 °C and +8 °C and a relative humidity between 65% and 90%, with a maximum core temperature of the product of +8 °C;
- a dry salting phase, preferably manual, distributing the tanning (including for example rock salt or sea salt, mixed with aromatic plants, spices and natural or artificial flavors) uniformly and delicately on the external surface of the anatomical piece with the use of churns or with a manual massage of the single anatomical piece, with a tanning weight between 1.5% and 4.5% of the weight of the meat to be treated;

- a phase of vacuum packing the salted product, so that the tanning always remains in contact with the meat and volatile aromas are not lost, and so that the product is protected from any bacterial aggression;
- a resting phase of the product under vacuum in a salting cell where it remains for at least seven days at a temperature below +10 °C;
- a phase of filling the anatomical piece into natural or artificial casing, after removing the vacuum bag;
- a cold rest phase of the bagged and tied product in a rest cell where it remains for at least twenty days (at a temperature between 0 °C and +7 °C and a relative humidity between 65% and 90%;
- a drying phase, which must allow rapid dehydration of the product already in the first days, including a first drying sub-phase in which the product stays in a drying room from day 1 to day 3 at a temperature between + 15 °C and +25 °C and a relative humidity between 50% and 80% and a second drying sub-phase in which the product stays in a drying room from day 4 to day 7 at a temperature between + 14 °C and +17 °C and a relative humidity between 80% and 95%;
- a phase of seasoning of the product in the seasoning rooms, specially air-conditioned rooms where air exchange and temperature and humidity control are ensured, where it remains for a period of between 1 month for leaner meats up to 16 months for meats with more intense marbling, at a temperature between + 12 °C and + 18 °C and a relative humidity between 80% and 95% so that there is a slow and gradual reduction of humidity of the product that is brought at a value of free water (Aw) <0.940, which is optimal for stopping the growth of unwanted bacteria. This is the condition that allows you to have a food product that is safe from a hygienic point of view without the use of chemical preservatives (Nitrites and Nitrates) or plant products having the same function;
- a phase of washing the aging molds, peeling the casing of the product and packaging it in a vacuum bag;
- an optional refinement phase in which the product stays in cells for at least seven days, at a temperature between + 6 °C and + 18 °C to favor the development of enzymatic actions of Proteolysis and Lipolysis that give the product finished the aroma and softness typical of a product matured over time.

At the end of the refinement phase, the dark ruby red color detected by a tristimulus colorimeter that measures the amount of red on the surface of the product cut, is well fixed and homogeneous in the anatomical piece, thanks to the activity of zinc-porphyrin, a pigment that it is formed from the union between zinc and hemoglobin. The repetition of the measurement of the amount of red at a predetermined distance from the first reading gives an indication of the stability of the color. In general, high red values detected at the time of cutting are associated with good color stability, but in some cases the product has a strong color at the first reading and then decays immediately afterwards due to an incomplete index of formation of the final zinc-porphyrin.

In a second embodiment of the method according to the present invention, in the dry salting step sodium nitrate is added to the tanning to give the final product a more intense red color, in the seasoning step the product remains in the seasoning rooms for a period of at least three weeks and the refinement phase is not present.

In a preferred embodiment, the dry salting, vacuum packing of the salted product, and stuffing of the anatomical piece into natural or artificial casing of the method of the present invention are carried out in a controlled atmosphere environment, in particular in a clean room. with minimum ISO 8 classification, as will be explained later in more detail.

Preferably, the method of the invention is used for the production of bresaola, a traditional Italian sausage or salami produced with only beef, lean and rich in iron. It is a cured meat produced from a single whole muscle, whose traditional maturing process classifies it as a short-aged (up to 16 months) boneless and rindless cured meat.

The bovine muscle masses, deprived of the bony and tendon parts, used for the production of bresaola are generally the following:
- rump, which corresponds to the posteromedial portion of the thigh musculature and includes the internal rectus muscle, the adductor muscle and the semimembranous muscle;
- tip of the hip, which corresponds to the part of the rump deprived of the adductor muscle;
- subofesa, which corresponds to the posterolateral portion of the thigh muscles and precisely the long vastus muscle;
- joist, which corresponds to the posterolateral portion of the thigh muscles and precisely the semitendinosus muscle;
- under the bone, which corresponds to the anterior fascia of the thigh and is composed of the anterior rectus muscle and the vastus internal and intermediate muscle.

The method of the invention was subjected to laboratory tests for all microbiological characteristics in order to ensure that the bagged product obtained with this method complied with the laws in force and that it had achieved all the objectives assumed in the design phase.

An initial check concerned the suitability for sale of the bagged product, that is, its compliance with the regulatory and legislative parameters and the organoleptic and qualitative objectives.

To do this, the following bacteriological analyzes were carried out:
- counts of colonies at 30 °
- counts of mesophilic lactic bacteria
- counts of Micrococci and Staphylococci
- counts of Enterobacteriaceae
- counts of Coagulase positive staphylococci
- counts of Brochotrix Thermosfacta
- spore counts of sulphite-reducing Clostridia
- Listeria Monocytogenes research
- research Salmonella spp
- Escherichia Coli research.

Table 1 below lists the results of the microbiological characterization carried out on the bresaola at the end of maturation:

**TABLE 1**

| Results of microbiologic characterization performed on bresaola at the end of seasoning | | | | | | | | |
|---|---|---|---|---|---|---|---|---|
| Group | Sample | Colonies Count at 30°C (ufc/g) | Lactic Bacteria Count (ufc/g) | Staph and Micrococcus Count (ufc/g) | *Enterobacteriaceae* Count | Coagulated Positive Staph Count (ufc/g) | *B. Thermosphacta* Count (ufc/g) | Sulfite Reducer Clostridium Spore Counts |
| 1 | **B24S** | 4.4E+06 | 9.0E+04 | 4.3E+05 | < 10 | < 100 | < 100 | < 10 |
| | **B24C** | 5.0E+02 | < 10 | 2.0E+02 | < 10 | < 100 | < 100 | < 10 |
| | **V17S** | 5.1E+06 | 1.4E+05 | 3.5E+05 | < 10 | < 100 | < 100 | < 10 |
| | **V17C** | 5.4E+02 | 2.0E+01 | | < 10 | < 100 | < 100 | < 10 |
| | **B25S** | 1.1E+07 | 9.1E+05 | 4.1E+05 | < 10 | < 100 | < 100 | < 10 |
| | **B25C** | 8.0E+04 | 4.2E+03 | | < 10 | < 100 | < 100 | < 10 |
| 3 | **B22S** | 3.6E+07 | 1.3E+07 | 3.6E+06 | < 10 | < 100 | < 100 | < 10 |
| | **B22C** | 3.1E+03 | 2.7E+03 | 3.0E+02 | < 10 | < 100 | < 100 | < 10 |
| | **B14S** | 7.1E+06 | 4.8E+06 | 1.3E+06 | < 10 | < 100 | < 100 | < 10 |
| | **B14C** | 8.2E+04 | 8.2E+04 | 4.0E+02 | 5.1E+04 | < 100 | < 100 | < 10 |
| | **V11S** | 3.1E+07 | 6.1E+06 | 8.2E+05 | < 10 | < 100 | < 100 | < 10 |
| | **V11C** | 2.4E+03 | 5.0E+02 | < 100 | < 10 | < 100 | < 100 | < 10 |
| 4 | **V8S** | 1.0E+07 | 1.0E+04 | 9.3E+04 | < 10 | < 100 | < 100 | < 10 |
| | **V8C** | 1.9E+02 | < 10 | | < 10 | < 100 | < 100 | < 10 |
| | **B15S** | 1.2E+07 | 1.2E+05 | 1.2E+07 | < 10 | < 100 | < 100 | < 10 |
| | **B15C** | 1.8E+02 | < 10 | | < 10 | < 100 | < 100 | < 10 |
| | **B18S** | 9.9E+06 | 7.9E+05 | 1.2E+05 | < 10 | < 100 | < 100 | < 10 |
| | **B18C** | 1.0E+04 | < 10 | | < 10 | < 100 | < 100 | < 10 |
| 6 | **B13S** | 6.3E+06 | 6.3E+06 | 3.1E+05 | < 10 | < 100 | < 100 | < 10 |
| | **B13C** | 3.7E+03 | < 10 | 5.0E+01 | 5.3E+02 | < 100 | < 100 | < 10 |
| | **V18S** | 2.1E+07 | 2.1E+07 | 6.7E+05 | < 10 | < 100 | < 100 | < 10 |
| | **V18C** | 6.0E+07 | 5.0E+03 | < 100 | < 10 | < 100 | < 100 | < 10 |
| | **B19S** | 1.3E+07 | 7.3E+06 | 2.5E+05 | < 10 | < 100 | < 100 | < 10 |
| | B19C | 8.5E+05 | < 10 | 1.0E+02 | < 10 | < 100 | < 100 | < 10 |

Table 2 below shows the results of the analyzes carried out on bresaola of groups 2 and 5 (S + V) which, at the end of maturation, were deprived of the casing and stored under vacuum at 15 °C for a month.

**TABLE 2**

| Results of microbiologic characterization performed on bresaola at the end of seasoning vacuum stored for one month at 15° C | | | | | | | | |
|---|---|---|---|---|---|---|---|---|
| Group | Sample | Colonies Count at 30°C (ufc/g) | Lactic Bacteria Count (ufc/g) | Staph and Micrococco Count (ufc/g) | *Enterobacteriaceae* Count | Coagulated Positive Staph Count (ufc/g) | *B. Thermosphacta* Count (ufc/g) | Sulphite Reducer Clostridium Spore Counts |
| 2 | **B1S** | 1.5E+07 | 2.0E+05 | 9.9E+06 | < 10 | < 100 | < 100 | < 10 |
| | **B1C** | 1.2E+03 | 50 | / | < 10 | / | / | < 10 |
| | **W26S** | 3.8E+06 | 4.0E+04 | 9.7E+05 | < 10 | < 100 | < 100 | < 10 |
| | **W26C** | 1.2E+03 | < 10 | / | < 10 | / | / | < 10 |
| 5 | **B7S** | 3.9E+06 | 1.0E+04 | 3.0E+06 | < 10 | < 100 | < 100 | < 10 |
| | **B7C** | 2.2E+03 | 90 | / | < 10 | / | / | < 10 |
| | **W15S** | 2.0E+07 | 3.0E+04 | 9.9E+06 | < 10 | < 100 | < 100 | < 10 |
| | **W15C** | 4.5E+05 | < 10 | / | < 10 | / | / | < 10 |

The results obtained showed superficial CMA between 3.8X106 and 2.0X107 cfu/g, consisting of Staphylococci and Micrococci and, to a lesser extent, of lactic bacteria. The CMA at the heart of the product was in the order of 103 cfu/g in three samples out of four analyzed, while in the W15C sample it was equal to 4.5X105 cfu/g. The subsequent characterization of the CMA made it possible to identify bacteria attributable to the genus Tetragenococcus, halophilic microorganisms typical of seasoned products. B. Thermosphact, Coagulase positive staphylococci, Enterobacteria and the spores of sulphite-reducing Clostridia were found to be below their respective analytical limits (100 and 10 cfu/g) in all samples analyzed. Regarding the pathogens searched (Listeria Monocytogenes, Salmonella spp and E. Coli O157: H7) they were always absent in 25 g of sample.

From these results it is clear that all bacterial counts have values within the limits defined by current regulations and that pathogenic germs were always absent in 25 g of sample.

It should be noted that the microbiological checks were carried out both at the end of the maturing and refining phases.

In Table 3 below, the chemical parameters of bresaola with different processing are compared, and it is evident that a soft chewing product with high quality organoleptic characteristics is obtained, thanks to the maturation of the cured meat with the lipolysis process of the adipose cells and proteolysis. The invention also concerns a plant for the production of raw cured meats without bone and without rind with a short maturation (up to 16 months), without nitrites, nitrates, other preservatives and antioxidants, in particular to produce a sausage product, more in particular bresaola.

**TABLE 3**

| Comparison between chemical parameters of bresaola with different working (ANOVA-Bonferroni test) | | | | | | |
|---|---|---|---|---|---|---|
| | Working Group | | | | | |
| | 1 | 2 | 3 | 4 | 5 | 6 |
| Salt % | 4.0 | 4.2 | - | 4.1 | 3.8 | - |
| Proteins % | 31.6 | 32.0 | 32.5 | 32.1 | 33.2 | 32.2 |
| Proteolysis Index* | 19.8 | 19.8 | 19.9 | 20.2 | 19.6 | 20.0 |

| | | | | | | |
|---|---|---|---|---|---|---|
| * grams of nitrogen soluble in trichloroacetic acid at 5% in 100 g of total nitrogen | | | | | | |

The production plant according to the invention is made in a controlled atmosphere environment, in particular in a clean room, in which the polluting microparticles that otherwise would remain suspended in the air are removed, avoiding that the devices and people who are inside the chamber can pollute the air. Clean room classification is based on the count of microparticles having a diameter greater than or equal to 0.5 *µ*m in a defined volume of air (e.g. one cubic meter).

In the ISO standards the membership class is defined according to a scale from ISO-1 to ISO-9, where ISO-1 indicates the best situation and ISO-9 the worst.

In the European GMP standards, used in the pharmaceutical sector and considered among the most restrictive, the class to which clean rooms belong is assigned with the letters A, B, C and D, where A indicates the best situation and D the worst. For example, when a class A cleanroom is in use, the maximum number of particles having a diameter greater than or equal to 0.5 *µ*m allowed in the cleanroom is 3520 and the maximum number of particles having a diameter greater than or equal to 5 *µ*m allowed in the clean room is 20.

The production plant according to the invention includes a plurality of stations made in a clean room, preferably:
- a station for receiving the raw material in the fresh state at a temperature between 0 °C and +8 °C in which the receiving step of the method according to the invention is carried out, said station comprising means for receiving and moving the material first receipt on the production line;
- a salting station in a clean room of minimum ISO 8 class, i.e. of ISO 8 class or better, in which the salting phase of the method according to the invention is performed, said station comprising means for dosing the amount of tanning;
- a vacuum station in a clean room of minimum class ISO 8 in which the vacuum packing phase of the method according to the invention is performed, said station comprising means for vacuum packing the salted product;
- a rest station in which the rest phase of the method according to the invention is performed, said station comprising a salting cell configured to maintain a predetermined temperature, preferably lower than +10 °C;
- a bagging station in a clean room of minimum class ISO 8 in which the bagging phase of the method according to the invention is performed, said station comprising means for stuffing into natural or artificial casing and tying the anatomical piece deprived of the vacuum bag;
- a cold resting station in which the cold resting phase of the method according to the invention is performed, said station comprising a resting cell configured to maintain a predetermined temperature, preferably between 0 °C and +7 °C, and a predetermined relative humidity, preferably between 65% and 90%;
- a drying station in which the drying phase of the method according to the invention is carried out, said station comprising a drying room configured to maintain a temperature between + 15 °C and + 25 °C and a relative humidity between 50 % and 95%;
- a curing station in which the curing phase of the method according to the invention is carried out, said station comprising curing rooms configured to maintain a temperature between + 12 °C and + 18 °C and a relative humidity between 80 % and 95%;
- a mold washing and product peeling station in which the phase of washing the maturing molds, peeling the product casing and packaging it in a vacuum bag of the method according to the invention, said station comprising means for washing, peeling and vacuum pack the product;
- an optional refining station in which the refining phase of the method according to the invention is performed, said station comprising cells configured to maintain a temperature between + 6 °C and + 18 °C.

Advantageously, the method of producing raw cured meats without bone and without rind with a short maturation (up to 16 months) of the invention guarantees a natural final product, not requiring the use of preservatives and antioxidants, neither of chemical origin nor of vegetable origin safe from a hygienic point of view, of high quality for aroma, taste and softness and with a natural ruby red color, free from stains or brown colors.

## Claims

1. Method of producing raw cured meats without bone and without rind with a short maturation including the following phases:
- a phase of receipt on the production line of the raw material in the fresh state at a temperature at the core of the product between 0 °C and +8 °C;
- a dry salting phase with a tanning weight between 1.5% and 4.5% of the weight of the meat to be treated;
- a phase of vacuum packing the salty product;
- a resting phase of the product under vacuum in a salting cell for at least seven days at a temperature below +10 °C;
- a phase of filling the anatomical piece into natural or artificial casing, after removing the vacuum bag;
- a cold rest phase of the bagged and tied product in a resting cell for at least twenty days at a temperature between 0 °C and +7 °C and a relative humidity between 65% and 90%;
- a drying phase in which the product remains in a drying room for at least seven days at a temperature between + 14 °C and + 25 °C and relative humidity between 50% and 95%;
- a phase of maturing of the product in the maturing rooms for a period of between 1 month and 16 months at a temperature between + 12 °C and + 18 °C and a relative humidity between 80% and 95%;
- a phase of washing the aging molds, peeling the casing of the product and packaging it in a vacuum bag;
- an optional refining phase in which the product stays in cells for at least seven days at a temperature between + 6 °C and + 18 °C.

2. Method for producing raw, boneless and rindless cured meats with short maturation according to claim 1, **characterized in that** the drying phase comprises a first drying sub-phase in which the product remains in a drying room from day 1 to day 3 at a temperature between + 15 °C and + 25 °C and a relative humidity between 50% and 80% and a second drying sub-phase in which the product stays in a drying room from day 4 to day 7 at a temperature between + 14 °C and + 17 °C and a relative humidity between 80% and 95%.

3. Method of production of raw boneless and rindless cured meat with short maturation according to claim 1 or 2, **characterized in that** the raw material received on the production line previously has been vacuum-packed fresh, i.e. not frozen, at a temperature of the meat at the core of the product between + 0 °C and +8 °C, and with a residual oxygen value in the vacuum bag of <= 0.5%.

4. Method of producing raw cured meats without bone and without rind with short maturation according to any of the preceding claims, **characterized in that** in the maturing phase the product is brought to a value of free water (Aw) <0.940.

5. Method for producing raw, boneless and rindless cured meats with short maturation according to any one of the preceding claims, **characterized in that** in the dry salting phase sodium nitrate is added to the tanning, in the maturing phase the product remains in the seasoning salt for a period of at least three weeks and the refinement phase is not present.

6. Method for producing raw, boneless and rindless cold cuts with short maturation according to any one of the preceding claims, **characterized in that** it is used for the production of bresaola, using the following bovine muscle masses, deprived of the bony and tendon parts: topside, tip of hip, underside, joint, underside.

7. Method for producing raw, boneless and rindless cured meats with short maturation according to any one of the preceding claims, **characterized in that** the phases of dry salting, vacuum packing of the salted product, and stuffing of the anatomical piece into casing natural or artificial are made in a controlled atmosphere environment with a minimum ISO 8 classification.

8. Plant for the production of raw, boneless and rindless cured meats with short maturation using the method according to any of claims 1 to 7, **characterized in that** it includes the following stations:
- a station for receiving the raw material in the fresh state at a temperature between 0 °C and +8 °C in which the receiving phase is carried out, said station comprising means for receiving and moving the raw material received on the production line;
- a salting station in which the salting step is carried out, said station comprising means for dosing the quantity of tanning;
- a vacuum station in which the vacuum packing step is carried out, said station comprising means for vacuum packing the salted product;
- a resting station in which the resting phase is carried out, said station comprising a salting cell configured to maintain a temperature below +10 °C;
- a bagging station in which the bagging step is performed, said station comprising means for bagging and binding the anatomical piece deprived of the vacuum bag;
- a cold rest station in which the cold rest phase is performed, said station comprising a rest cell configured to maintain a temperature between 0 °C and +7 °C, and a relative humidity between 65% and 90%;
- a drying station in which the drying phase is performed, said station comprising a drying room configured to maintain a temperature between + 14 °C and + 25 °C and a relative humidity between 50% and 95%;
- a seasoning station in which the seasoning phase is performed, said station comprising seasoning rooms configured to maintain a temperature between + 12 °C and + 18 °C and a relative humidity between 80% and 95%;
- a station for washing the product from molds from seasoning, peeling and putting into vacuum bags;
- an optional refining station in which the refining phase is carried out, said station comprising cells configured to maintain a temperature between + 6 °C and + 18 °C.

9. Plant for the production of raw, boneless and rindless cured meats with short maturation according to claim 8, **characterized in that** the stations for dry salting, for vacuum packing the salted product, and for filling the anatomical piece are made in the chamber white of minimum class ISO 8.

## Patentansprüche

1. Herstellungsverfahren für kurz gereifte rohe Wurstwaren ohne Knochen und Schwarte, bestehend aus den folgenden Phasen:
- eine Phase, in der das Rohmaterial im frischen Zustand bei einer Kerntemperatur des Produkts zwischen 0 °C und +8 °C in die Produktionslinie gelangt;
- eine Trockensalzphase mit einem Gerbgewicht zwischen 1,5 % und 4,5 % des Gewichts des zu behandelnden Fleisches;
- eine Vakuumverpackungsphase des gesalzenen Produkts;
- eine Ruhephase des Produkts unter Vakuum in einer Salzzelle für mindestens sieben Tage bei einer Temperatur unter + 10 °C;
- eine Phase des Verstopfens des anatomischen Teils in Natur- oder Kunstdarm nach Entfernen des Vakuumbeutels;
- eine kalte Ruhephase des verpackten und abgebundenen Produkts in einer Ruhezelle für mindestens zwanzig Tage bei einer Temperatur zwischen 0 °C und +7 °C und einer relativen Luftfeuchtigkeit zwischen 65 % und 90 %;
- eine Trocknungsphase, in der das Produkt mindestens sieben Tage lang in einem Trockenraum bei einer Temperatur zwischen +14 °C und +25 °C und einer relativen Luftfeuchtigkeit zwischen 50 % und 95 % verbleibt;
- eine Reifephase des Produkts in den Reiferäumen für einen Zeitraum zwischen 1 Monat und 16 Monaten bei einer Temperatur zwischen +12 °C und +18 °C und einer relativen Luftfeuchtigkeit zwischen 80 % und 95 %;
- eine Phase des Waschens der Reifeformen, des Abziehens der Hülle des Produkts und des Verpackens in einem Vakuumbeutel;
- eine optionale Veredelungsphase, in der das Produkt mindestens sieben Tage lang bei einer Temperatur zwischen +6 °C und +18 °C in den Zellen verbleibt.

2. Verfahren zur Herstellung von kurz gereiftem Rohpökelfleisch ohne Knochen und Schwarte nach Anspruch 1, **dadurch gekennzeichnet, dass** die Trocknungsphase eine erste Trocknungsunterphase umfasst, in der das Produkt von Tag 1 bis Tag in einem Trockenraum verbleibt 3 bei einer Temperatur zwischen +15 °C und +25 °C und einer relativen Luftfeuchtigkeit zwischen 50 % und 80 % und einer zweiten Trocknungsunterphase, in der das Produkt vom 4. bis zum 7. Tag in einem Trockenraum bei einer Temperatur dazwischen verbleibt +14 °C und +17 °C und eine relative Luftfeuchtigkeit zwischen 80 % und 95 %.

3. Verfahren zur Herstellung von kurz gereiftem Rohfleisch ohne Knochen und Schwarte nach Anspruch 1 oder 2, **dadurch gekennzeichnet, dass** das auf der Produktionslinie erhaltene Rohmaterial zuvor frisch, d. h. nicht gefroren, bei einer bestimmten Temperatur vakuumverpackt wurde des Fleisches im Kern des Produkts zwischen +0 °C und +8 °C und mit einem Restsauerstoffwert im Vakuumbeutel von <=0,5 %.

4. Verfahren zur Herstellung von kurzgewürztem Rohpökelfleisch ohne Knochen und Schwarte nach einem der vorhergehenden Ansprüche, **dadurch gekennzeichnet, dass** das Produkt in der Reifungsphase auf einen freien Wasserwert (Aw) < 0,940 gebracht wird.

5. Verfahren zur Herstellung von kurzgewürztem Rohpökelfleisch ohne Knochen und Schwarte nach einem der vorhergehenden Ansprüche, **dadurch gekennzeichnet, dass** in der Trockensalzphase der Gerbung Natriumnitrat zugesetzt wird, in der Reifungsphase das Produkt verbleibt das Salz reift für einen Zeitraum von mindestens drei Wochen und die Verfeinerungsphase ist nicht vorhanden.

6. Verfahren zur Herstellung von kurz gereiftem, rohem Wurstwarenfleisch ohne Knochen und ohne Schwarte nach einem der vorhergehenden Ansprüche, **dadurch gekennzeichnet, dass** es zur Herstellung von Bresaola unter Verwendung der folgenden, von Knochen befreiten Rindermuskelmasse verwendet wird und Sehnenteile: Oberseite, Hüftspitze, Unterseite, Magatello, Sottosso.

7. Verfahren zur Herstellung von kurz gereiftem Rohpökelfleisch ohne Knochen und ohne Schwarte nach einem der vorhergehenden Ansprüche, **dadurch gekennzeichnet, dass** die Phasen des Trockensalzens, der Vakuumverpackung des gesalzenen Produkts und des Einpackens des anatomischen Teils in Beuteln durchgeführt werden Natur- oder Kunst-därme werden in einer kontrollierten Atmosphäre mit einer Mindestklassifizierung nach ISO 8 hergestellt.

8. Produktionsanlage für kurzgewürzte rohe Wurstwaren ohne Knochen und Schwarte, die das Verfahren nach einem der Ansprüche 1 bis 7 anwendet, **dadurch gekennzeichnet, dass** sie die folgenden Stationen umfasst:
- eine Empfangsstation für das Rohmaterial im frischen Zustand bei einer Temperatur zwischen 0 °C und +8 °C, in der die Empfangsphase durchgeführt wird, wobei die Station Mittel zum Empfangen und Bewegen des auf der Produktionslinie empfangenen Rohmaterials umfasst,
- eine Salzstation, in der die Salzphase durchgeführt wird, wobei die Station Mittel zur Dosierung der Gerbmenge umfasst,
- eine Vakuumstation, in der die Vakuumverpackungsphase durchgeführt wird, wobei die Station Mittel zum Vakuumverpacken des gesalzenen Produkts umfasst,
- eine Ruhestation, in der die Ruhephase durchgeführt wird, wobei die Station eine Salzzelle umfasst, die so konfiguriert ist, dass sie eine Temperatur unter + 10 °C aufrechterhält;
- eine Einpackstation, in der die Einpackphase durchgeführt wird, wobei die Station Mittel zum Einpacken und Binden des vom Vakuumbeutel befreiten anatomischen Teils umfasst,
- eine Kaltruhestation, in der die Kaltruhephase durchgeführt wird, wobei die Station eine Ruhezelle umfasst, die so konfiguriert ist, dass sie eine Temperatur zwischen 0 °C und +7 °C und eine relative Luftfeuchtigkeit zwischen 65 % und 90 % aufrechterhält;
- eine Trocknungsstation, in der die Trocknungsphase durchgeführt wird, wobei die Station einen Trocknungsraum umfasst, der so konfiguriert ist, dass er eine Temperatur zwischen +14 °C und +25 °C und eine relative Luftfeuchtigkeit zwischen 50 % und 95 % aufrechterhält;
- eine Reifestation, in der die Reifephase durchgeführt wird, wobei die Station Reiferäume umfasst, die so konfiguriert sind, dass sie eine Temperatur zwischen +12 °C und +18 °C und eine relative Luftfeuchtigkeit zwischen 80 % und 95 % aufrechterhalten;
- eine Station zum Waschen des Produkts aus der Reifeform, Schälen und Einlegen in Vakuumbeutel;
- eine optionale Raffinierungsstation, in der die Raffinierungsphase durchgeführt wird, wobei die Station Zellen umfasst, die so konfiguriert sind, dass sie eine Temperatur zwischen +6 °C und +18 °C aufrechterhalten.

9. Anlage zur Herstellung von kurzgewürzten rohen Wurstwaren ohne Knochen und ohne Schwarte nach Anspruch 8, **dadurch gekennzeichnet, dass** das Trockensalzen, das Vakuumverpacken des gesalzenen Produkts und das Eintüten des anatomischen Teils in einem Beutel erfolgen Kammer weiß mit Mindestklasse ISO 8.

## Revendications

1. Procédé de fabrication de charcuterie crue courtement affinée, désossée et sans croûte comprenant les phases suivantes:
- une phase de réception de la matière première sur la chaîne de production à l'état frais à une température à coeur du produit comprise entre 0 °C et +8 °C;
- une phase de salage à sec avec un poids tannant compris entre 1,5% et 4,5% du poids de la viande à traiter;
- une phase de conditionnement sous vide du produit salé;
- une phase de repos du produit sous vide dans une cellule de salage pendant au moins sept jours à une température inférieure à +10 °C;
- une phase d'empotage de la pièce anatomique dans un boyau naturel ou artificiel, après élimination du sac sous vide,
- une phase de repos à froid du produit ensaché et ficelé dans une cellule de repos pendant au moins vingt jours à une température comprise entre 0 °C et +7 °C et une humidité relative comprise entre 65 % et 90 %;
- une phase de séchage au cours de laquelle le produit reste dans une salle de séchage pendant au moins sept jours à une température comprise entre +14 °C et +25 °C et une humidité relative comprise entre 50% et 95 %;
- une phase de maturation du produit dans les chambres d'affinage pendant une durée comprise entre 1 mois et 16 mois à une température comprise entre +12 °C et +18 °C et une humidité relative comprise entre 80 % et 95 %;
- une phase de lavage des moules d'affinage, d'épluchage du produit et de conditionnement sous vide,
- une phase facultative de raffinement au cours de laquelle le produit reste en cellule pendant au moins sept jours à une température comprise entre +6 °C et +18 °C.

2. Procédé de production de charcuterie crue à maturation courte sans os ni couenne selon la revendication 1, **caractérisé par le fait que** la phase de séchage comprend une première sous-phase de séchage dans laquelle le produit reste dans une salle de séchage du jour 1 au jour 3 à une température comprise entre +15 °C et +25 °C et une humidité relative comprise entre 50 % et 80 % et une deuxième sous-phase de séchage dans laquelle le produit reste dans une salle de séchage du jour 4 au jour 7 à une température comprise entre +14 °C et +17 °C et une humidité relative comprise entre 80 % et 95 %.

3. Procédé de production de charcuteries crues désossées et de couenne à maturation courte selon la revendication 1 ou 2, **caractérisé par le fait que** la matière première reçue sur la ligne de production a été préalablement conditionnée sous vide fraîche, c'est-à-dire non congelée, à une température de la viande au coeur du produit entre +0 °C et +8 °C, et avec une valeur d'oxygène résiduel dans le sac sous vide <=0,5%.

4. Procédé de production de charcuterie crue courtement assaisonnée sans os ni couenne selon l'une quelconque des revendications précédentes, **caractérisé par le fait que** dans la phase de maturation le produit est amené à une valeur d'eau libre (Aw) < 0,940.

5. Procédé de production de charcuterie crue courtement assaisonnée sans os ni couenne selon l'une quelconque des revendications précédentes, **caractérisé par le fait que** dans la phase de salage à sec on ajoute au tannage du nitrate de sodium, dans la phase de maturation le produit reste dans le sel mûrit pendant une période d'au moins trois semaines et la phase d'affinage n'est pas présente.

6. Procédé de production de charcuteries crues à maturation courte, désossées et sans croûte selon l'une quelconque des revendications précédentes, **caractérisé par le fait qu'**il est utilisé pour la production de bresaola, en utilisant les masses musculaires bovines suivantes, dépourvues d'os et parties tendineuses: dessus, pointe de la hanche, dessous, magatello, sottosso.

7. Procédé de production de charcuterie crue courtement affinée sans os et sans croûte selon l'une quelconque des revendications précédentes, **caractérisé par le fait que** les phases de salage à sec, de conditionnement sous vide du produit salé, et d'ensachage de la pièce anatomique en les boyaux naturels ou artificiels sont fabriqués dans un environnement à atmosphère contrôlée avec une classification ISO 8 minimum.

8. Installation de production de charcuteries crues désossées et sans couenne, peu assaisonnées, mettant en oeuvre le procédé selon l'une quelconque des revendications 1 à 7, **caractérisée par le fait qu'**elle comprend les postes suivants:
- un poste de réception de la matière première à l'état frais à une température comprise entre 0 °C et +8 °C dans lequel s'effectue la phase de réception, ledit poste comprenant des moyens de réception et de déplacement de la matière première reçue sur la ligne de production;
- un poste de salage dans lequel est réalisée la phase de salage, ledit poste comprenant des moyens de dosage de la quantité de tannage;
- une station sous vide dans laquelle est réalisée la phase de conditionnement sous vide, ladite station comprenant des moyens pour conditionner sous vide le produit salé;
- une station de repos dans laquelle est réalisée la phase de repos, ladite station comprenant une cellule de salage configurée pour maintenir une température inférieure à + 10 °C;
- un poste d'ensachage dans lequel est réalisée la phase d'ensachage, ledit poste comprenant des moyens d'ensachage et de ficelage de la pièce anatomique privée du sac sous vide,
- une station de repos à froid dans laquelle est réalisée la phase de repos à froid, ladite station comprenant une cellule de repos configurée pour maintenir une température comprise entre 0 °C et +7 °C, et une humidité relative comprise entre 65 % et 90 %;
- une station de séchage dans laquelle est réalisée la phase de séchage, ladite station comprenant une salle de séchage configurée pour maintenir une température comprise entre +14 °C et +25 °C et une humidité relative comprise entre 50 % et 95 %;
- une station d'affinage dans laquelle est réalisée la phase d'affinage, ladite station comprenant des salles d'affinage configurées pour maintenir une température comprise entre +12°C et +18°C et une humidité relative comprise entre 80% et 95%;
- une station permettant de laver le produit du moule d'affinage, de l'éplucher et de le mettre en sacs sous vide,
- une station de raffinage optionnelle dans laquelle est réalisée la phase de raffinage, ladite station comprenant des cellules configurées pour maintenir une température entre +6 °C et +18 °C.

9. Installation de production de charcuterie crue saumurée sans os et sans croûte selon la revendication 8, **caractérisée par le fait que** le salage à sec, le conditionnement sous vide du produit salé et l'ensachage de la pièce anatomique sont effectués dans un chambre blanche avec classe minimale ISO 8.
